# EUROPEAN PATENT APPLICATION

(11) **EP 3 786 765 A1**
(43) Date of publication of application: **03.03.2021**
(21) Application number: 19194362.0
(22) Date of filing: 29.08.2019
(51) Int. Cl.: G06F 3/01, G02B 27/00

(54) **MICROSCOPE, CONTROL CIRCUIT, METHOD AND COMPUTER PROGRAM FOR GENERATING INFORMATION ON AT LEAST ONE INSPECTED REGION OF AN IMAGE**

(71) Applicant: Leica Instruments (Singapore) Pte. Ltd., 608924 Singapore (SG)
(72) Inventor: PAULUS, Robert, 88145 Hergatz (DE); ROSTYKUS, Manon, 9400 Rorschach (CH)
(74) Representative: 2SPL Patentanwälte PartG mbB

(57) **Abstract**

Examples relate to a microscope, a method and a computer program for generating information on at least one inspected region of an image.

A control circuit (130) for generating information on at least one inspected region of an image, configured to determine image data (111) of an image of an object, obtain eye tracking information (112) of an observer of the image, and generate information (121) on the at least one inspected region of the image based on the image data (111) and the eye tracking information (112).

## Description

### Technical field

Examples relate to image data processing and mark up.

### Background

In some image display applications areas of interest can be marked up for an observer. For example, in microscope applications in the field of medical surgery it may be helpful, if a microscope system is able to detect and mark certain areas, which are of importance for a user. To adjust a microscope and perform an operation on a certain object at the same time, a user may be enabled to interact with the microscope in a way that allows keeping focus on his work.

### Summary

Hence, there is a need for an improved concept for generating information in image data.

This need may be satisfied by the subject matter of the claims.

An example relates to a control circuit for generating information on at least one inspected region of an image. The control circuit is configured to determine image data of an image of an object, and to obtain eye tracking information of an observer of the image. The control circuit is further configured to generate information on the at least one inspected region of the image based on the image data and the eye tracking information.

The information on the at least one inspected region may be used to control and improve an inspection process. Such information can be made available to an observer and may prevent regions from being inspected multiple times. Examples may contribute to increasing an inspection efficiency as the information on the inspected regions may be used as tracking information. Since the information on the inspected regions can be made available to others together with the image data, the inspection process can be followed easier.

In an example, the control circuit is configured to determine whether a region of the image has been inspected based on whether at least one of the eye tracking information or the observer fulfills one or more criteria.

Once one or more criteria are fulfilled by the eye tracking information or the observer, a region may be considered as inspected, where the criteria may be checked using different implementations. Examples thereby provide efficient detection criteria.

For example, the one or more criteria comprise at least one element of the group of pausing or resting of a gaze of the observer on a region longer than a pre-determined time threshold, a gesture of the observer acknowledging an inspection, and a control input of the observer acknowledging an inspection.

Defining a time threshold for determining whether a gaze of an observer rested on a certain region longer that the threshold may be an efficient implementation for the criteria. In case of a complex region to be inspected, an inspection time may be longer than for a less complex region. Therefore, a time threshold would be rather based on a longer inspection time. In case of a less complex structure of the region to be inspected, the observer may finish the inspection in a time below the pre-determined time threshold. In this case, the observer may consider the region to be inspected as inspected and provide an according signal. For example, a predefined gesture or a control input may be used. In this way the time efficiency may be improved. Some examples may solely rely on an observer's input, be it by gesture or control input.

In an example, the one or more criteria comprise at least one element of the group of determining a predefined gesture of the observer, pressing a button by the observer, or the observer indicating complete inspection of a region using a specific tool.

The observer may mark or consider a region as inspected by directly pushing a button, which enables a clear and simple signaling in examples. In some examples it may be considered that the observer needs both of his hands for working/operating. A specific tool for surgeries/inspections having an activation function may be used in such examples. In this way, he may use both of his hands for his work without pushing a button outside his working area, while still being able to deliver the respective control input using the tool.

Alternatively or additionally, the observer may use a gesture like closing at least one of his eyes for a certain time or blinking with his eye(s). In this way, the observer may focus on his hands at work without a need of operating any input interface, e.g. pushing any kind of button or turning a certain wheel.

In another example, the control circuit is configured to guide the observer to one or more regions for inspection in displayed image data.

Once the observer finished the inspection of a region displayed on the image data, he may proceed and inspect the next region given in the image data. In some examples, the observer may be automatically guided to the next region. This may contribute to time efficiency and avoid distractions.

In a further example, the control circuit is configured to guide the observer by using at least one of an overlay mask for the image data with predetermined regions for inspection and a moving autofocus function in the displayed image data.

By use of a predetermined mask, the observer may directly see the specific regions to be inspected, where he may be guided through. The autofocus may directly show the observer whether a certain region he is inspecting may be a region to be inspected. By autofocusing the next region to be inspected, the observer may automatically be guided through the regions, as a gaze of the observer is attracted by the focused region. Duplicate inspections of the same regions may be reduced or even avoided.

In an example the control circuit is configured to guide the observer through a predefined sequence of regions of interest in the image data.

The predefined sequence may be based on a certain priority and help the observer to switch to the next region to be observed without any need to decide which region should be inspected next. The observer may hence be guided through a predefined sequence in some examples, which may further contribute to an efficient inspection process.

In another example, the control circuit may be configured to determine statistical data on observed regions in the image data.

The determined statistical data may be used for further improving the guidance of the observer through the sequence of the regions to be inspected, leading to a higher time efficiency. Efficient inspection sequences may be determined by evaluating the statistical data. For example, tracking and evaluating user inputs in terms of inspecting sequences/orders of certain critical regions in an application may allow improving or optimizing inspection sequences. For example, from the statistical data it may be determined that if certain critical regions are inspected first shorter inspecting times may result for other regions. The statistical data may hence help developing efficient inspection sequences.

In an example, the sequence is based on the statistical data or an inspection time of each region of interest.

The sequence of guiding the observer from one region of interest to another may be determined by use of the previously determined statistical data, which may lead to a faster and more reliable guidance of the observer. Guidance may be adapted over time. For example, in a situation when the observer sees a problem and needs to fix something before going to the next region, he may put the inspection process on hold. This may be based on an input (button, gesture) of the observer or observer activities in the region may be automatically detected. The guidance (sequence) may then be accordingly adapted.

In another example, the observer's point of view (point of gaze, the point the observer focusses on) is marked on the object during inspection.

Other observers looking at the same image, for example other surgeons, may directly see, what the main surgeon is looking at on the operation image. This may help to improve the interaction between different persons.

In a further example regions of interest are marked on the object during inspection.

Other observers looking at the same image, as for example other surgeons, may directly see, where the regions of interest are located on the object. This may also help to improve the interaction between other surgeons and may save valuable time.

In another example, the control circuit is configured to highlight inspected regions in the displayed image.

Other observers looking at the same image may see which regions of interest are already inspected. This may be beneficial in remote surgery and in teaching.

As a further example, the control circuit is configured to provide the information on the at least one inspected region of the image for quality control of a manufactured object.

The information on the at least one inspected region of the image may be useful for quality checks of manufactured objects in order to obtain information on whether the quality of certain components of the manufactured object is sufficient.

In an example, the control circuit is configured to determine, as the image data, image data of a human body part using a microscope. It is further configured to display the image data to an observer of the human body part, and to obtain the eye tracking information of the observer of the image using an eye tracking module comprised in the microscope. Further, the control circuit is configured to overlay and display a mask with marked regions of interest in the image to the observer, generate the information on the at least one inspected region of the image based on the image data and the eye tracking information, and overlay and display information on inspected and non-inspected regions in the image.

The information on the at least one inspected region of the image may be used to control and improve an inspection process. Such information can be made available to an observer and may prevent regions from being inspected multiple times. Since the information on the inspected region can be made available to others with the image data, the inspection process can be followed easier.

The combination of overlaying additional information and tracking the observer's eye may enable a faster inspection of the regions of interest.

In an example, a microscope for generating information on inspected regions of an image comprises an input interface, an output interface, and a control circuit for generating information on at least one inspected region of an image according to the examples described herein.

The control circuit included in the microscope processes the data input via the input interface, the image data and the eye tracking information, and generates the information on inspected regions of an image in order to output the same via the output interface. The combination of the image data and the eye tracking information may contribute to a reliable and time efficient inspection of the regions of interest.

An example relates to a method for generating information on at least one inspected region of an image is another example. The method comprises determining image data of an image of an object, and obtaining eye tracking information of an observer of the image. The method further comprises generating information on the at least one inspected region of the image data based on the image data and the eye tracking information.

As another example, a computer program has a program code for performing the method for generating information on inspected regions of an image, when the computer program is executed on a computer, a processor, or a programmable hardware component.

The described method may be performed by an installed software/program, either included in the microscope or on an external computer which may be connected via a wired or wireless connection.

### Short description of the Figures

Some examples of apparatuses and/or methods will be described in the following by way of example only, and with reference to the accompanying figures, in which
Fig. 1 illustrates block diagram of and example of a control circuit for generating information on at least one inspected region of an image, and an example of a microscope comprising a control circuit, an input interface and an output interface;
Fig. 2 illustrates a schematic drawing of an image in an example using information overlay for an image of an object, (a) before and (b) after inspecting the first area (region of interest);
Fig. 3 shows a flowchart illustrating the method for generating information on at least one inspected region of an image; and
Fig. 4 shows a schematic illustration of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

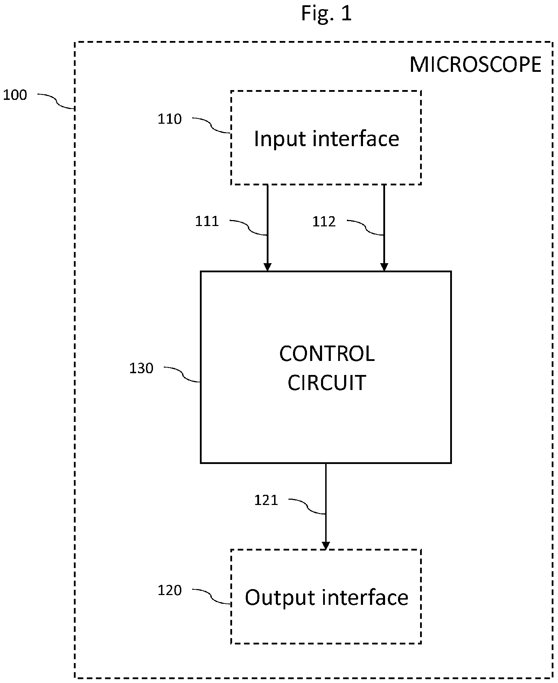

Fig. 1 shows a schematic illustration of an example of a control circuit 130 for generating information on at least one inspected region of an image of an object to be observed. Image data 111 and eye tracking information 112 are input to the control circuit 130. The control circuit 130 determines the image data 111 of an image of an object and obtains eye tracking information 112 of an observer of the image. For example, the control circuit 130 comprises accordingly adapted interfaces.

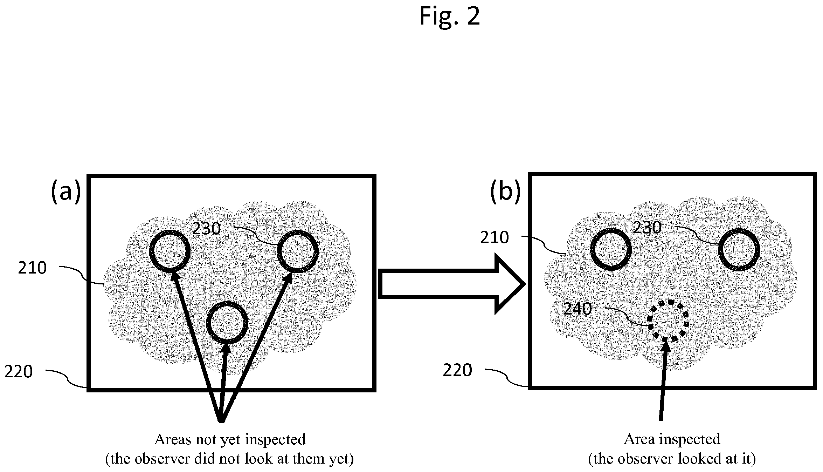

In an example, the image data 111 of the image of the object to be observed comprises regions which are of interest for the observer. There may be one or more regions of interest. The position of said regions of interest may be provided by additional overlay information, as will be detailed with the help of Fig. 2 The image data 111 may be digital image data represented by digital or binary information. For example, such image data may be obtained using an image capture device, such as a camera with an accordingly adapted image sensor that detects information of an image. As will be outlined in more detail subsequently, such a sensor may be comprised by an optical device, e.g. a microscope, a telescope, goggles, or any other apparatus having a magnification device, etc. The image data may be represented in a raw format or in a compressed format.

The eye tracking information 112 may be digital data comprising information about where an observer is looking at on a certain image based on images taken from the observer's eye(s). A corresponding viewing direction may be determined from one or more images taken from the observer's eye(s). Depending on how the pupils change their position on each image of the eye, the viewing direction may be determined. These information or data may be recorded by a camera or image sensor being directed to the observer's eye or an eye tracking module. For example, the eye tracking information may comprise information on a viewing angle of the observer such that based on given geometries it can be determined at which region of the image an observer is looking. In some examples, the eye tracking information may be relative to the image data, e.g. comprising pixel or region coordinates relative to the image data and indicating where a gaze of the observer is directed to.

The information on the at least one inspected region of the image 112 may also be relative to the image data and may be in form of digital coordinates indicating the inspected regions in the image. E.g. the image may be a two-dimensional image and the information on the at least one inspected region of the image 112 may indicate inspected areas. The information 121 on the at least one inspected region may be information for an observer on whether a region of interest has been successfully inspected. This may be an area of a part of an organ, where, for example, a complex structure to be observed is inspected or not.

In examples, the control circuit 130 may be implemented using one or more processing units, one or more control modules, one or more processing devices, any means for processing, such as a processor, a computer or a programmable hardware component being operable with accordingly adapted software. In other words, the described functions of the control circuit 130 may as well be implemented in software, which is then executed on one or more programmable hardware components. Such hardware components may comprise a general-purpose processor, a Digital Signal Processor (DSP), a micro-controller, etc. The control circuit 130 may for example be a processor (e.g. a central processing unit (CPU)) for processing the input image data 111 and the eye tracking information 112 to determine said information 121 on the at least one inspected region.

Based on the combination of the image data 111 and the eye tracking information 112, the control circuit 130 is configured to generate information 121 on the at least one inspected region and outputs the same, for example, to control and improve an inspection process. Such information may be made available to an observer and may prevent regions from being inspected multiple times. Examples may contribute to increasing an inspection efficiency as the information on the inspected regions may be used as tracking information. Since the information 121 on the at least one inspected region can be made available to others with the image data 111, the inspection process can be followed easier.

Further, the control circuit 130 may be comprised by a microscope 100, which is indicated in Fig. 1 using broken lines (optional components are depicted using broken lines). The microscope 100 may further comprise an input interface 110 for inputting image data 111 and eye-tracking information 112, and an output interface 120 for outputting generated information 121 on inspected regions of the image.

As an example, the control circuit 130 may be configured to determine, as the image data, image data 111 of a human body part using a microscope 100. The control circuit 130 may further be configured to display the image data 111 to an observer of the human body part, and to obtain the eye tracking information 112 of the observer of the image using an eye tracking module comprised in the microscope 100. Further, the control circuit 130 may be configured to overlay and display a mask with marked regions of interest in the image to the observer, generate the information 121 on the at least one inspected region of the image based on the image data 111 and the eye tracking information 112, and overlay and display information on inspected and non-inspected regions in the image. Generating information 121 on inspected regions of an image may be based on overlaying additional information combined with tracking the observer's eye, with regard to a microscope 100 used for surgeries.

As already implied in Fig. 1, a microscope 100 may comprise an input interface 110 for inputting image data 111 and eye tracking information 112, a control circuit 130 for generating information on at least one inspected region of an image based on the image data 111 and eye tracking information 112, and an output interface 120 for outputting information 121 on inspected regions of an image.

The control circuit 130 may for example be a processor (CPU) inside the microscope 100 or an external computer connected to the microscope 100 via cable or wireless connection. An input interface 110 may be an interface for converting data into binary codes for processing the same via the control circuit 130. An output interface 120 may be an interface for converting processed binary codes into image data or image information, for example. In case, the control circuit 130 is installed in an external computer being connected to the microscope via cable connection, the input interface 110 and the output interface 120 may be a universal serial bus (USB) port or similar cable standards. In case of a wireless connection between the microscope 100 and the computer, both the input and output interface each comprise a wireless antenna for using Wi-Fi, Bluetooth or other wireless connection standards.

Further to this example, Fig. 2 illustrates a schematic drawing of an example using a type of information overlay 220 for an image of an object 210, (a) before and (b) after inspecting the first area 240 (region of interest).

Here, an information overlay 220, like for example an overlay mask, is provided on top of the displayed image of the object 210. In this way, the observer has an overview over all regions of interest 230 of the corresponding image directly.

In Fig. 2 (a) an information overlay 220, on top of the image data 111, is illustrated highlighting the regions of interest 230, where none of them is yet inspected. Here, the input image data 111, in particular, the information overlay 220 on the image of the object 210 highlighting the regions of interest 230 are shown. By use of the information overlay 220, the observer can directly see all highlighted regions of interest 230 to be inspected on the image of the object 210. By use of the additional eye tracking information, the control circuit 130 may be configured to generate the information on at least one inspected region of an image. This means, that at least one region of interest is inspected and correspondingly highlighted on the information overlay 220. Fig. 2 (b) shows the result of the successfully inspected region of interest 240 being highlighted differently, compared to the uninspected regions of interest 230.

An image of an object 210 may be an organ in a human body, a product to be manufactured or any other object where specific areas need to be inspected. An information overlay 220 may for example be an overlay mask containing the information where specific regions to be inspected may be located on a corresponding object. Regions of interest 230 may be specific regions of an object, like complex structures on a surface, which need to be observed/inspected. Inspected regions of interest 240 may be the same region on the object with the additional information that they are successfully inspected (broken line circle in Fig. 2(b)), for example, regarding quality control of manufactured products.

In a further example, the control circuit 130 may be configured to determine, whether a region of interest of the image has been inspected based on whether at least one of the eye tracking information 112 or the observer fulfills one or more criteria. The one or more criteria to be fulfilled may comprise at least one element of the group of pausing or resting of a gaze of the observer on a region longer than a pre-determined time threshold, a gesture of the observer acknowledging an inspection, and a control input of the observer acknowledging an inspection. Such a control input of the observer acknowledging an inspection may be at least one of determining a predefined gesture of the observer, pressing a button by the observer, or the observer indicating complete inspection of a region using a specific tool.

In short, either the control circuit 130 may conclude whether the region of interest is inspected after a pre-determined time threshold of observing the same region, or the observer himself may decide by interaction (pushing a button, or using gestures) with, for example, a microscope whether a region of interest may be inspected.

The observer may directly acknowledge the inspection of a region of interest by himself, by pushing a button, when he is of the opinion that the inspection is complete. Alternatively, the observer may use a specific tool for surgeries having an activation function to interact with the microscope. The surgery specific tool may be a device for interacting with the microscope. By use of the eye tracking, the observer may also interact with the microscope by simply blinking with his eye(s). In this way, the observer may focus on his hands at work without a need of operating any input interface, e.g. pushing any kind of button or turning a certain wheel.

The surgery specific tool may be a (wireless) tool being used for surgeries. The tool may comprise a button, a touch sensor or a kind of a circuit sending a signal to the control circuit 130 to automatically conclude that an inspection of a corresponding region of interest may be completed/finished.

Further to the above examples, the control circuit 130 may be configured to guide the observer to one or more regions 240 for inspection in displayed image data 111. The guidance of the observer may be performed by using at least one of an information overlay 220 (overlay mask) for the image data with predetermined regions for inspection (as illustrated in Fig. 2) and a moving autofocus function in the displayed image data. The observer may additionally be guided through a predefined sequence of regions of interest in the image data, based on statistical data collected by the control circuit 130 in previous inspections of similar objects. Also, the inspection time of previous inspections may be a base for said predefined sequence.

The guidance of the user may be performed by automatically focusing (autofocus) on the next region to be observed once a previous region of interest is successfully inspected. The sequence may also be comprised in the autofocus function. Additionally, it may be displayed on the image of the object.

The statistical data may be based on previously obtained regions of interest on similar objects in previous inspections. These data may be collected data in a data base from former observations of objects of the same type. Statistical data may also comprise the time for inspecting a region of interest in order to determine a time threshold for certain regions. The time threshold for inspecting a region of interest may a maximum duration of inspecting a region of interest until it is considered to be successfully inspected. Different regions may have different thresholds.

The observer might not be bothered with looking for the next region of interest 240, he may directly be guided without any loss of time. In this way he may focus on his operation without a need to adjust the microscope 100 manually.

By use of a predetermined mask showing the regions of interest, the observer may directly see a specific region to be inspected, and optionally the sequence to inspect them one after another. Alternatively, an autofocus function may directly show the observer whether a certain region he is inspecting is a region of interest. The autofocus may help the observer to stay focused on his work instead of adjusting the focus of the microscope manually during his work or operation.

The pre-defined sequence may help the observer to switch to the next region to be observed without any need to decide which region should be inspected next. In this way, the observer might not have to check which region of interest is to be inspected in the following step.

The sequence of guiding the observer from one region of interest to another may be determined by use of the previously determined statistical data, which may lead to a faster and more reliable guidance of the observer.

Based on the above examples, the observer's point of view may additionally be marked directly on the object during inspection. In addition to that, the regions of interest may also be marked directly on the object during inspection. Further, the inspected regions may be highlighted by the control circuit 130.

Other observers (co-workers, co-surgeons, students) looking at the same scenery as for example a main surgeon, may see what the main surgeon is looking at on the operation area, where the regions of interest may be located, and which regions of interest are already inspected. All of these details may help to improve the interaction between other surgeons/co-workers/students. Said details may be displayed on a screen visible for all surgeons involved in the corresponding surgery, for example.

With regard to the above examples, a quality control for manufactured objects or products to be assembled may be provided. Here, the quality of each component assembled in a manufacturing step may be inspected in order to ensure that corresponding regions of interest are ok, e.g. do not comprise any defects in corresponding materials or the surfaces thereof. This may be done for each component after each manufacturing step of a product to be assembled.

The information 121 on the at least one inspected region of the image may be useful for quality checks of manufactured objects in order to obtain information on whether the quality of certain components of the manufactured object is sufficient.

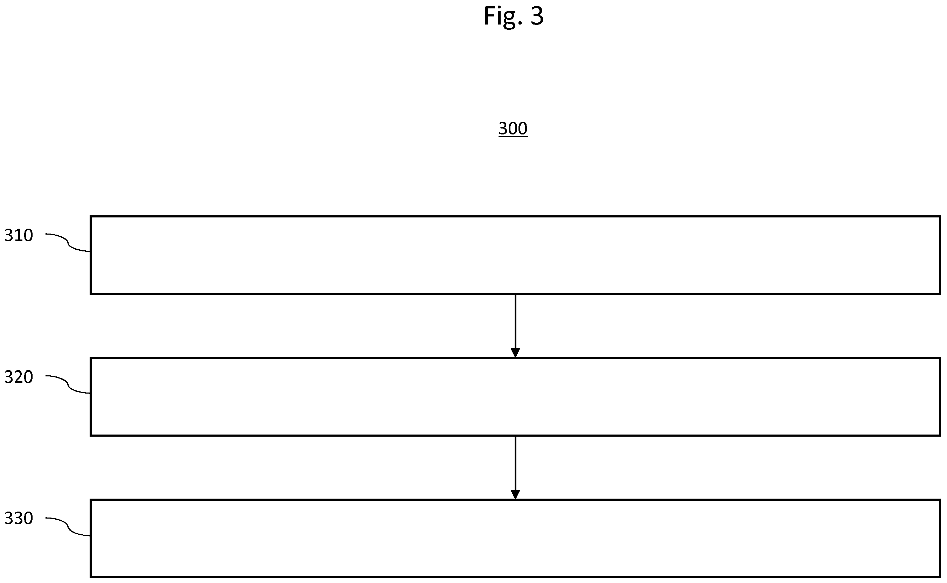

Fig. 3 shows a schematic illustration of a method 300 for generating information on at least one inspected region of an image. It comprises determining 310 image data of an image of an object. Further, it comprises obtaining 320 eye tracking information of an observer of the image, and generating 330 information on the at least one inspected region of the image data based on the image data and the eye tracking information.

Further to this example, a computer program may have a program code for performing the method for generating information on inspected regions of an image, when the computer program may be executed on a computer, a processor, or a programmable hardware component.

The described method may be performed by an installed software/program, either included in the microscope or on an external computer which may be connected via a wired or wireless connection.

An example may be for military use. For example, drones or other unmanned military vehicles may be further examples. In case of an aiming system for said unmanned military vehicles, an image of a target object or multiple target objects may be provided. In this scenario, also an information overlay or a mask may be comprised in the image data. The corresponding control unit may automatically map multiple targets on the image which may be the regions of interest on the image. By combining this overlay with an autofocus function, the regions of interest may be inspected one after another in order to aim or focus at each of the target objects.

Further examples may be any application using a magnification or optical tool, like for example, binoculars, telescopes or night vision goggles.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some examples, some one or more of the most important method steps may be executed by such an apparatus.

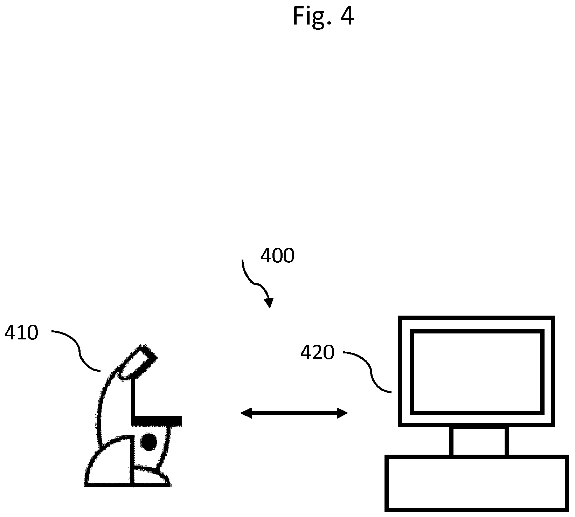

Some examples relate to a microscope comprising a system as described in connection with one or more of the Figs. 1 to 3. Alternatively, a microscope may be part of or connected to a system as described in connection with one or more of the Figs. 1 to 3. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one example, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA) of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some examples, some one or more of the most important method steps may be executed by such an apparatus.

Depending on certain implementation requirements, examples of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some examples according to the invention comprise a data carrier having electronically readable control signals, which are capable of cooperating with a programmable computer system, such that one of the methods described herein is performed.

Generally, examples of the present invention can be implemented as a computer program product with a program code, the program code being operative for performing one of the methods when the computer program product runs on a computer. The program code may, for example, be stored on a machine readable carrier.

Other examples comprise the computer program for performing one of the methods described herein, stored on a machine readable carrier.

In other words, an example of the present invention is, therefore, a computer program having a program code for performing one of the methods described herein, when the computer program runs on a computer.

A further example of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further example of the present invention is an apparatus as described herein comprising a processor and the storage medium.

A further example of the invention is, therefore, a data stream or a sequence of signals representing the computer program for performing one of the methods described herein. The data stream or the sequence of signals may, for example, be configured to be transferred via a data communication connection, for example, via the internet.

A further example comprises a processing means, for example, a computer or a programmable logic device, configured to, or adapted to, perform one of the methods described herein.

A further example comprises a computer having installed thereon the computer program for performing one of the methods described herein.

A further example according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods are preferably performed by any hardware apparatus.

### List of reference Signs

- 100: Microscope
- 110: Input interface
- 111: Image data
- 112: Eye tracking information
- 120: Output interface
- 121: Information on the at least one inspected region of the image
- 130: Control circuit
- 210: Image of an object
- 220: Information overlay
- 230: Region of interest
- 240: Inspected region
- 300: Method for generating information on at least one inspected region of an image
- 310: Determining image data of an image of an object
- 320: Obtaining eye tracking information of an observer of the image
- 330: Generating information on the at least one inspected region of the image data based on the image data and the eye tracking information
- 400: Microscope system
- 410: Microscope
- 420: System

## Claims

1. A control circuit (130) for generating information on at least one inspected region of an image, configured to:
determine image data (111) of an image of an object;
obtain eye tracking information (112) of an observer of the image; and
generate information (121) on the at least one inspected region of the image based on the image data (111) and the eye tracking information (112).

2. The control circuit (130) according to claim 1, wherein the control circuit (130) is configured to determine whether a region of the image has been inspected based on whether at least one of the eye tracking information (112) or the observer fulfills one or more criteria.

3. The control circuit (130) according to claim 2, wherein the one or more criteria comprise at least one element of the group of pausing or resting of a gaze of the observer on a region longer than a pre-determined time threshold, a gesture of the observer acknowledging an inspection, and a control input of the observer acknowledging an inspection.

4. The control circuit (130) according to claims 2 or 3, wherein the one or more criteria comprise at least one element of the group of determining a predefined gesture of the observer, pressing a button by the observer, or the observer indicating complete inspection of a region using a specific tool.

5. The control circuit (130) according to one of the claims 1 to 4, wherein the control circuit (130) is configured to guide the observer to one or more regions for inspection in displayed image data.

6. The control circuit (130) according to claim 5, wherein the control circuit (130) is configured to guide the observer by using at least one of an overlay mask (220) for the image data (111) with predetermined regions for inspection and a moving autofocus function in the displayed image data.

7. The control circuit (130) according to claims 5 or 6, wherein the control circuit (130) is configured to guide the observer through a predefined sequence of regions of interest (230) in the image data.

8. The control circuit (130) according to one of the claims 1 to 7, wherein the control circuit (130) is configured to determine statistical data on observed regions in the image data.

9. The control circuit (130) according to claims 7 and 8, wherein the sequence is based on the statistical data or an inspection time of each region of interest (230).

10. The control circuit (130) according to one of claims 1 to 9, wherein the observer's point of view is marked on the object during inspection.

11. The control circuit (130) according to one of claims 1 to 10, wherein regions of interest are marked on the object during inspection.

12. The control circuit (130) according to one of the claims 1 to 11, wherein the control circuit (130) is configured to highlight inspected regions (240) in the displayed image.

13. The control circuit (130) according to one of the claims 1 to 12, wherein the control circuit (130) is configured to provide the information (121) on the at least one inspected region of the image for quality control of a manufactured object.

14. The control circuit (130) according to one of the claims 1 to 13, wherein the control circuit (130) is configured to:
determine, as the image data (111), image data of a human body part using a microscope (100);
display the image data (111) to an observer of the human body part;
obtain the eye tracking information (112) of the observer of the image using an eye tracking module comprised in the microscope (100);
overlay and display a mask (220) with marked regions of interest (230) in the image to the observer;
generate the information (121) on the at least one inspected region of the image based on the image data and the eye tracking information; and
overlay and display information on inspected and non-inspected regions in the image.

15. A microscope (100) for generating information on inspected regions of an image, comprising:
an input interface (110);
an output interface (120); and
a control circuit (130) according to one of the claims 1 to 14.

16. A method (300) for generating information on at least one inspected region of an image, comprising:
determining (310) image data of an image of an object;
obtaining (320) eye tracking information of an observer of the image; and
generating (330) information on the at least one inspected region of the image data based on the image data and the eye tracking information.

17. A computer program having a program code for performing the method according to claim 14, when the computer program is executed on a computer, a processor, or a programmable hardware component.
